# EUROPÄISCHE PATENTANMELDUNG

(11) **EP 1 983 753 A1**
(43) Veröffentlichungstag der Anmeldung: **22.10.2008**
(21) Anmeldenummer: 07106418.2
(22) Anmeldetag: 18.04.2007
(51) Int. Cl.: H04N 7/173, H04N 5/00

(54) **Verfahren und System zum Aussenden von interaktiver Werbung**

(71) Anmelder: Swisscom Fixnet AG, 3050 Bern (CH)
(72) Erfinder: Martschitsch, Andreas, 3006, Bern (CH)
(74) Vertreter: P&TS Patents & Technology Surveys SA

(57) **Zusammenfassung**

Die Erfindung bezieht sich auch auf ein Verfahren zum Aussenden von interaktiver Werbung eines Werbenden (1) in einem Fernsehkanal. Der interaktive Inhalt eines Werbespots wird anhand einer internetbasierten Plattform eines Brokers (4) definiert; es werden in der benannten internetbasierten Plattform des Brokers (4) Aussendekriterien des benannten Werbespots definiert, wobei die benannten Aussendekriterien mindestens eine Liste von ausgewählten Netzbetreibern (5) bestimmt; das Format des benannten interaktiven Inhalts des Werbespots wird beim Broker (4) in Abhängigkeit von den ausgewählten Netzbetreibern (5) umgewandelt und der interaktive Inhalt wird den ausgewählten Netzbetreibern (5) zur Verfügung gestellt und der benannte interaktive Werbespot wird über die ausgewählten Netzbetreiber (5) ausgesendet. Die Erfindung bezieht sich auch auf ein System zum Aussenden von interaktiver Werbung in einem Fernsehkanal.

## Beschreibung

### Technisches Gebiet

Die Erfindung bezieht sich auf ein Verfahren und ein System zum Aussenden von interaktiver Werbung entsprechend den unabhängigen Ansprüchen.

### Stand der Technik

Es sind aus dem Stand der Technik mehrere Dokumente bekannt, die sich mit interaktiver Werbung beschäftigen.

US-A1-2007/0022009 offenbart eine interaktive Werbeserverplatform im Internet. Dies dient zum Verkauf von Werbeplätzen in verschiedenen Fernsehkanälen, nicht der Produktion von interaktiver Werbung.

WO-A1-03/019444 offenbart ein System, um die Wirksamkeit einer interaktiven Werbekampagne zu messen und zu analysieren.

EP-A1-1 635 254 offenbart eine template-basierte Herstellung von interaktiver Werbung. Es handelt sich jedoch nur um ein System eines Anbieters.

EP-B1-1 157 554 offenbart ein interaktives System und Verfahren zur Herstellung von interaktiver Werbung. Es betrifft vor allen Dingen das Einfügen von Objekten in verschiedene Streams eines Fernsehvideos. Wenn die Objekte während des Abspielens durch den Zuschauer angeklickt oder selektiert werden, wird die interaktive Werbung, die sich hinter dem Objekt verfügt, abgespielt.

US-B1-7,103,904 offenbart eine template-basierte interaktive Werbung. Die Templates werden in den Set-Top-Boxen gespeichert und müssen somit nicht übertragen werden. Sie können benutzerspezifisch angepasst werden.

Ein Problem, welches in den bestehenden Systemen zur Herstellung und Aussendung von interaktiver Werbung besteht, ist, dass kein einheitliches Format besteht, in dem die interaktive Werbung kodiert, übertragen und abgespielt wird. Verschiedene Netzbetreiber haben verschiedene Standards bei der Kodierung und bei der Interaktion mit dem Zuschauer. Bei vielen technischen Lösungen braucht es eine Set-Top-Box des Netzbetreibers. Da eine Set-Top-Box oft integraler Bestandteil des Kabelnetzes ist, muss sie den spezifischen Gegebenheiten des Netzes und den Funktionsanforderungen des Netzbetreibers angepasst werden. Es werden sowohl hardware- als auch softwarebasierte Lösungen angewendet. Eine technisch einheitliche Lösung gibt es hier nicht. Vielmehr sind verschiedene Standards vorhanden, so dass ein Werbender für jeden Standard eine andere interaktive Werbung vorbereiten muss. Oft können nur Zuschauer, die ein Werbespot über einen bestimmten Netzbetreiber empfangen, auf den entsprechenden interaktiven Inhalt zugreifen. Auch die Programmierung der Werbekampagne ist aufwendig, unter anderem weil die Sendekriterien für jedes Netz separat angegeben werden müssen.

### Darstellung der Erfindung

Es ist ein Ziel der vorliegenden Erfindung, die genannten Nachteile zu vermeiden.

Insbesondere ist es ein Ziel, ein Verfahren und ein System anzubieten, welche die Anpassung vom interaktiven Teil der Werbung an das vom Netzbetreiber vorgegebene Format ermöglichen.

Es ist ein weiteres Ziel, ein Verfahren und ein System aufzubauen, in der der Werbende seine Vorgaben für die Interaktion der Werbung mit dem Zuschauer einfach durch eine internetbasierte Plattform definieren kann und damit verschiedene Netzbetreiber erreichen kann.

Es ist ein anderes Ziel der vorliegenden Erfindung, eine Plattform aufzubauen, mit der Werbende den interaktiven Inhalt der Werbung einfach gestalten kann.

Es ist ein anderes Ziel der vorliegenden Erfindung, eine Plattform aufzubauen, mit der Werbende den interaktiven Inhalt gestalten kann, ohne auf das Format des späteren Netzbetreibers und die Art der Interaktion der Zuschauer, die bei verschiedenen Netzbetreiber verlangt wird, Rücksicht nehmen zu müssen.

Erfindungsgemäss wird dieses Ziel durch ein Verfahren und ein System gemäss den unabhängigen Ansprüchen erreicht.

Weitere vorteilhafte Ausführungsformen sind in den Unteransprüchen angegeben.

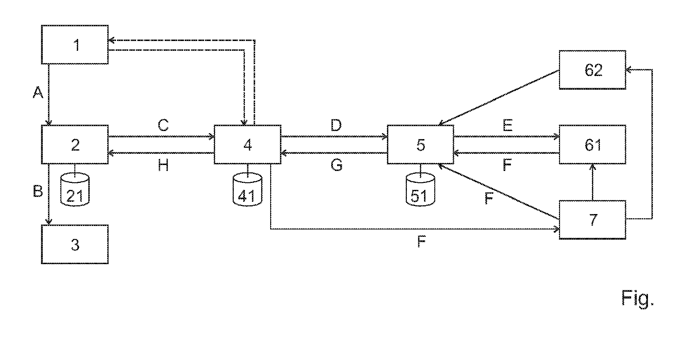

### Kurze Beschreibung der Figur

Die Erfindung wird anhand der beigefügten Figur näher erläutert, wobei die einzige Figur eine schematische Ansicht eines erfindungsgemässen Systems zeigt.

### Wege zur Ausführung der Erfindung

Das erfindungsgemässe Verfahren und System zum Aussenden von interaktiver Werbung wird mit Hilfe der einzigen Figur näher erläutert. In einem ersten Schritt A nimmt ein Werbender 1 Kontakt mit einer Marketing Agentur 2 oder einer Marketingabteilung der eigenen Firma auf, um einen Werbespot für ein Produkt oder eine Dienstleistung zu drehen. Dieser Werbespot sollte entsprechend dieser Anmeldung und dem Wunsch des Werbenden 1 interaktiv sein, d. h. eine Interaktion mit den Fernsehzuschauern 7 ermöglichen. Die Marketing Agentur 2 schafft in einem zweiten Schritt B einen Werbespot entsprechend den Anforderungen des Werbenden 1, wobei sie einen Produzenten 3 des Werbespots verwendet. Der Produzent 3 liefert das Video oder Videoband des Werbespots an die Marketing Agentur 2 oder den Werbenden 1.

Danach verwendet die Marketing Agentur 2 in Schritt C eine internetbasierte Plattform eines Brokers 4 oder Vermittlers, um den interaktiven Teil des Werbespots zu definieren. Diese zentrale Stelle im System erlaubt es, dem Benutzer zahlreiche interaktive Elemente gemäss seinen Vorstellungen zu definieren:
- Eine Liste der Netzbetreiber 5, in welchen die Interaktivität ermöglicht sein soll;
- Form der Interaktivität;
   - DAL (Dedicated Adviser Location); dies ermöglicht, den eigentlichen Fernsehkanal zu verlassen und eine spezielle Seite zu erreichen, die ebenfalls interaktiv sein kann. Diese Seite kann für die Produkte des Werbenden werben und der Zuschauer kann eine Bestellung vornehmen. Wenn er diese Seite wieder verlässt, kommt er zum eigentlichen Fernsehkanal zurück.
   - Long format ads; wenn der Zuschauer mehr Informationen zu einem Produkt will, bekommt er einen zusätzlichen Werbespot gezeigt, der abgespielt wird, wenn er einen entsprechenden Knopf drückt.
   - Microsites. Der Bildschirm wird aufgeteilt, um in einem Teil (Ecke, unterer Rand, etc.) die zusätzlich geforderte Information zu sehen.
   - Ein einfaches Overlay; der Zuschauer erhält zusätzliche Information, die über dem normalen Fernsehprogramm abgespielt wird. Das eigentliche Programm wird also nicht unterbrochen. Es können zusätzliche Texte oder Graphiken angezeigt werden.
      ➢ das Overlay kann dazu da sein, zusätzliche Information anzufordern (RFI, request for information). Dies kann ein Telefonanruf oder das Zusenden einer Broschüre per Post sein.
      ➢ Non RFIs, in denen keine Information zugesendet wird. Ist beispielsweise für Umfragen geeignet.
      ➢ Werbung zum direkten Kauf (purchase ads). Der Benutzer kann direkt eine Ware bestellen.
   - Starten eines interaktiven Spiels, das Teile der Werbung enthält und welches zum Kauf animieren soll. Es können Gegenstände gewonnen werden.
   - Ein Knopf, hinter der sich eine Adresse verbirgt und der mit dem zusätzliche Informationen zu einem Produkt erhalten kann.

   • Eine Abfolge von Prompts, die während des interaktiven Werbespots präsentiert werden;
   • Die Reaktionen, Rückmeldungen oder Antworten, die von den Zuschauern gegeben werden können, können vorgegeben werden;
      - Eine einfache Umfrage mit der Antwort Ja, Nein oder einer vorgegebene Antwort;
      - Ein Ratespiel mit einer Anzahl von vorgegebenen Antworten.
      - Ein Knopf (red button), der zu den weiterführenden Informationen führt.
   • Der Rückkanal kann vorgegeben werden;
      - Als Rückkanal kann direkt eine Verbindung zum Broker über ein Kommunikationsnetz wie ein Mobilfunknetz, ein Festnetz mittels Kurzmeldungen (SMS, USSD) oder Anrufe (IVR) angegeben werden.
      - Der Rückkanal kann eine Adresse sein, auf die der Zuschauer zugreifen kann. Der Inhalt der Adresse wird Zuschauer dargestellt.
      - Internet.
      - Eine Fernbedienung ist mit einem Telefonfestnetz des Zuschauers verbunden. Das Festnetz wird als Rückkanal genutzt. Ein zentraler Server des Netzbetreibers 5 oder des Brokers 4 nimmt die Rückmeldungen an.
      - Der Rückkanal läuft über Fernbedienung und Set-Top-Box über den Netzbetreiber 5. Der Netzbetreiber 5 sammelt Antworten und Reaktionen verschiedener Zuschauer und leitet diese zum Broker 4 verdichtet oder ohne Zeitverzug weiter. Er kann Antworten und Reaktionen auch ohne Zeitverzug an den Broker 4 weiterleiten.
   • Zusätzliche Elemente, die in dem Werbespot verwendet werden sollen, Logos, Bilder, etc.
   • Eine Liste der Fernsehkanäle, in welchen der Werbespot gesendet werden sollen und in denen die Interaktivität eingeschaltet sein soll;
   • Die Zeiten, an denen der Werbespot gesendet wird, und den Aussendezeitraum;
   • Anzahl der Aussendungen pro Zeiteinheit;
   • Etc.

Auf einer Internetseite kann der interaktive Inhalt des Werbespots auf der Basis von auswählbaren Templates definiert werden. Es können dabei verschiedene Templates für verschiedene Formen der Interaktivität, wie sie oben erwähnt wurde, verwendet werden. Es kann beispielsweise ein Template pro oben genannte Möglichkeit
■ DAL (Dedicated Adviser Location);
■ Long format ads;
■ Microsites;
■ Overlay;
■ Etc.
geben und je Möglichkeit verschiedene vorgegebene Informationen abfragen, die geeignet sind, um den speziellen interaktiven Inhalt der Werbung und die gewünschte Art der Interaktion zu definieren.

Der Broker 4 speichert in der Datenbank 41 alle angegebenen Informationen, d.h. den interaktiven Inhalt aus den Templates und den angegebenen Parametern, von der Marketing Agentur 2, und schafft eine interaktive Identifizierung ID des Werbespots und/oder der entsprechenden Werbekampagne, die zusätzlich gespeichert wird. Die interaktive Identifizierung ID des Werbespots wird nun als Identifizierung für die interaktive Werbekampagne verwendet. Der Broker 4 kopiert die interaktive Identifizierung ID in den Werbespot, damit ein Link zwischen den interaktiven Inhalt und den nicht interaktiven Teil des Werbespots (eigentliches Video) besteht. Er gibt das modifizierte Videoband an die Marketing Agentur 2 zurück.

Da es heute nicht um einfache Videotapes handelt muss, sondern um einfache Videodateien, kann auch die Datei auf die Internetseite geladen werden. Die Marketing Agentur 2 gibt an welcher Stelle der Datei, welche Interaktion gefordert ist und/oder welche Informationen erscheinen sollen und der Broker 4 modifiziert die Datei durch Einfügen der ID. Die Marketing Agentur 2 kann dann die modifizierte Datei wieder herunterladen. Die Modifikation eines Videotapes oder einer CD geschieht im Prinzip auf die gleiche Weise.

Im nächsten Schritt D verbindet sich der Broker 4 mit den Netzbetreibern 5 und stellt den interaktiven Inhalt des Werbespots und die ID zur Verfügung. Dabei wird das Format des benannten interaktiven Werbespots beim Broker 4 in Abhängigkeit vom Netzbetreiber automatisch von einer Software umgewandelt. Die Umwandlung wird vom Format des Netzbetreibers 5 abhängen und berücksichtigt (nicht abschliessende Aufzählung)
• Netzbetreiber für digitales Kabelfernsehen (CATV)
• Netzbetreiber für digitales Satellitenfernsehen (DTH)
• Netzbetreiber für digitales erdgebundene Fernsehen (DTT)

Der umgewandelte interaktive Inhalt kann je nach Netzbetreiber entweder in einer Datenbank 41 des Brokers oder in einer Datenbank des Betreibers abgelegt werden. Je nach System des Betreibers und nach Interaktivität kann dieser interaktive Inhalt entweder gleichzeitig mit dem Videosignal an alle Zuschauer, oder bei Bedarf nur an die Zuschauer, die dies bestellen, übermittelt werden.

Im Schritt E wird über den Netzbetreiber 5 der Werbespot ausgesendet. Wenn beim Aussenden die benannte Identifizierung ID im entsprechenden Werbespot detektiert wird, wird das Aussenden oder die Wiedergabe des interaktiven Inhalts ausgelöst. Die Detektion der interaktiven Identifizierung ID und das Auslösen des interaktiven Inhalts können in der Set-Top-Box des Zuschauers 7 oder beim Netzbetreiber 5 geschehen. Die interaktive Identifizierung ID dient dabei als Trigger für das Aussenden des interaktiven Inhalts.

Ein Werbespot kann im Rahmen einer Werbekampagne selbstverständlich mehrfach gesendet werden, wobei jedes Mal, wenn die ID detektiert wird, das Aussenden des interaktiven Inhalts ausgelöst wird. Beim Aussenden werden ausserdem die vom Werbenden 1 vorgegeben Kriterien (Fernsehkanäle, Netzbetreiber, Sendezeitraum, Anzahl der Sendungen pro Zeiteinheit, Start und Ende der interaktive Werbekampagne, etc.) von den Netzbetreibern und/oder von den Set-Top Boxes bei den Zuschauern beachtet.

Durch die vom Broker getätigte Umwandlung brauchen die Netzbetreiber keine Anpassung ihrer Infrastruktur oder beim Abspielen der Werbespots vorzunehmen. Die Netzbetreiber 5 kooperieren mit den Brokern 4 und haben ihre Einrichtungen dahingehend angepasst, dass sie die Identifizierung ID in den Videodaten erkennen und nach der Erkennung eine entsprechende Interaktivität gegenüber dem Zuschauer 7 auslösen können.

Die verschiedenen Systeme sind entsprechend den Netzbetreibern 5 ausgestattet. In einer Datenbank 51 des Netzbetreibers 5 sind Daten über die Abonnenten gespeichert. Weit verbreitet sind beispielsweise Set-Top-Boxen 6, über die der Zuschauer 7 die Antwort, die Reaktion oder die Rückmeldung dem Netzbetreiber 5 zukommen lassen kann. Dabei werden die Zuschauer mit einer Identifizierung in der Set-Top-Box oder in einer Chipkarte in der Set-Top-Box identifiziert. Andere Systeme sind im Rahmen der Erfindung möglich.

In einem System wird mindestens ein Teil des interaktiven Inhalts des Werbespots auf einer Fernsehbedienung 62 des Zuschauers 7 angezeigt. Der Zuschauer 7 kann die Fernbedienung 62 dann auch nutzen, um eine Antwort zu generieren und abzusenden. Eine passende Fernbedienung wird unter anderem unter der Name Betty-TV (www.betty-tv.ch) angeboten. Im Rahmen von Betty TV ist der Fernseher mit der Telefonfestnetzleitung verbunden, um den Rückkanal zu bilden. Ein zentraler Server nimmt die Antworten, Rückmeldungen, etc. an. Die interaktive Fernbedienung 62 hat eine eigene Anzeige und verfügt über Tasten für direktes Mitmachen am Fernsehen. Dies ersetzt die herkömmliche Fernbedienung und bietet mit Zusatzangeboten einen echten Mehrwert. Mindestens ein Teil des interaktiven Inhalts des Werbespots kann auf der Anzeige einer Fernsehbedienung des Zuschauers 7 angezeigt werden.

Nach oder während der Ausstrahlung des Werbespots kann der Fernsehzuschauer 7 im Schritt F auf den Werbespot reagieren. Die Rückkanäle sind entweder direkt zum Broker 4 oder über den Netzbetreiber 5 (Schritt G). Der einzelne Rückkanal wird vom einzelnen technischen System abhängen. Eine direkte Kommunikation mit dem Broker 4 ist beispielsweise über ein Mobilfunknetz, über das Internet oder über ein Festnetz, mittels Kurzmeldungen (SMS, USSD) oder Anrufe wie IVR (Interactive Voice Response) möglich. In diesem Fall wird die Telefonnummer, die web-Adresse oder der Code, der gesendet werden muss, während des Werbespots eingeblendet oder die Nummer ist bereits im Gerät selber (Fernseher, Set-Top-Box oder Fernbedienung) vorgegeben oder einprogrammiert. Die Telefonnummer kann während des Definierens des inaktiven Inhalts vorgegeben werden.

Diese Art des Rückkanals erlaubt auch das Einbinden von Zuschauern 7, die über keinen direkten Rückkanal mit dem Netzbetreiber 5 verfügen. Wenn die Antwort über den Netzbetreiber 5 übermittelt wird, kann das Format der Antwort vom Broker 4 umgewandelt werden. Die Netzbetreiber 5 können die Antwort oder die Rückmeldung ohne Zeitverzug direkt an den Broker 4 senden oder Antworten und Rückmeldungen sammeln und zu einem späteren Zeitpunkt die Antworten, einzeln oder verdichtet, weiterleiten.

Es ist denkbar, dass der Fernsehzuschauer 7 sich zuerst bei dem Broker 4 registriert und seine Personaldaten angibt. Diese Daten können in der benannten Datenbank 41 oder einer separaten Datenbank gespeichert werden. Auf diese Weise können die Antworten den einzelnen Zuschauern 7 zugeordnet werden. Andere Kampagnen (zum Beispiel für Umfragen) erfordern keine Registrierung für das Absenden einer Antwort.

Da jedoch der Benutzer mit einem Identifizierungsmodul (beispielsweise einer SIM-Karte) oder einer Set-Top-Box 61 ausgestattet ist, kann die dort befindliche Identifikation des Zuschauers genutzt werden, wenn die Antwort oder Rückmeldung gesendet wird. Die Antwort oder Rückmeldung kann mit dieser oder einer anderen vorhandenen Identität des Zuschauers 7 verknüpft und das verknüpfte Ergebnis gesendet werden. Der Empfänger kann dann diese Identität nutzen, um beispielsweise die vorhandenen Personaldaten wie Lieferadresse einer der genannten Datenbanken 41, 51 zu entnehmen.

In Abhängigkeit von dem Werbespot kann der Broker 4 im letzten Schritt H die Rückmeldungen auswerten und einen Bericht an die Marketing Agentur 2 oder den Werbenden 1 senden, senden oder ggf. die Ergebnisse über eine Internetseite zur Verfügung stellen. Bei Umfragen können die Ergebnisse anonymisiert weitergeleitet werden.

Die Erfindung bezieht sich auch auf ein System zum Aussenden von interaktiver Werbung in einem Fernsehkanal zur Durchführung des beschriebenes Verfahrens umfassend eine internetbasierte Plattform des Brokers 4 mit
- Mitteln zur Definition von einem interaktiven Inhalt eines Werbespots;
- Mitteln zur Definition der Aussendekriterien des interaktiven Werbespots, wobei die benannten Aussendekriterien mindestens eine Liste von ausgewählten Netzbetreibern 5 bestimmt;
- Mitteln zum Umwandeln des Formats des benannten interaktiven Inhalts in Abhängigkeit von den Netzbetreibern 5;
- Mitteln zum Weiterleiten des interaktiven Inhalts zu den ausgewählten Netzbetreibern 5.

Die internetbasierte Plattform kann Mittel zum Empfangen von SMS, USSD, IVR umfassen oder mit einem Telefonfestnetz verbunden sein, so dass der Fernsehzuschauer 7 direkt mit dem Broker 4 kommunizieren kann. Die Mittel zur Definition des interaktiven Inhalts des Werbespots können wie beschrieben template-basiert sein.

Wie bereits erwähnt, können als Aussendekriterien neben der Liste der Netzbetreiber 5, eine Liste der Fernsehkanäle und/oder ein Zeitplan oder ein Zeitfenster für die Aussendung des Werbespots definiert werden und der interaktive Inhalt die Art der Interaktivität, die Abfolge der Prompts, vorgegebene Antworten, Logos und Bilder definiert. Zusätzlich können vorteilhaft in der internetbasierten Plattform Mittel zur Registrierung der Fernsehzuschauer 7 vorhanden sein. Alle genannten Mittel der internetbasierten Plattform können Software- und Hartwarekomponenten umfassen.

### Bezugszeichenliste

- 1: Werbender
- 2: Marketing Agentur
- 21: Datenbank der Marketing Agentur 2
- 3: Produzenten des Werbespots
- 4: Broker
- 41: Datenbank des Brokers
- 5: Netzbetreiber
- 51: Datenbank des Netzbetreibers 5
- 61: Set-Top-Box des Netzbetreibers 5
- 62: Fernbedienung
- 7: Fernsehzuschauer

- A bis: H einzelne Verfahrensschritte
- ID: interaktive Identifizierung eines Werbespots oder einer Werbekampagne

## Patentansprüche

1. Ein Verfahren zum Aussenden von interaktiver Werbung eines Werbenden (1) in einem Fernsehkanal, umfassend folgende Verfahrenschritte:
(a) der interaktive Inhalt eines Werbespots wird anhand einer internetbasierten Plattform eines Brokers (4) definiert;
(b) es werden in der benannten internetbasierten Plattform des Brokers (4) Aussendekriterien des benannten Werbespots definiert, wobei die benannten Aussendekriterien mindestens eine Liste von ausgewählten Netzbetreibern (5) bestimmt;
(c) das Format des benannten interaktiven Inhalts des Werbespots wird beim Broker (4) in Abhängigkeit von den ausgewählten Netzbetreibern (5) umgewandelt und der interaktive Inhalt wird den ausgewählten Netzbetreibern (5) zur Verfügung gestellt und
(d) der benannte interaktive Werbespot wird über die ausgewählten Netzbetreiber (5) ausgesendet.

2. Das Verfahren gemäss Anspruch 1, wobei eine interaktive Identifizierung (ID) des Werbespots und/oder der entsprechenden Werbekampagne im Werbespot eingefügt wird, wobei die benannte interaktive Identifizierung (ID) dem benannten interaktiven Inhalt entspricht.

3. Das Verfahren gemäss Anspruch 2, wobei das Aussenden des interaktiven Inhalts ausgelöst wird, wenn die benannte Identifizierung (ID) beim Senden im entsprechenden Werbespot detektiert wird.

4. Das Verfahren gemäss einem der Ansprüche 1 bis 3, in welchem eine Rückmeldung des Zuschauers (7) an den benannten Broker (4) gesendet wird.

5. Das Verfahren gemäss einem der Ansprüche 1 bis 4, in welchem eine Rückmeldung des Zuschauers (7) über einen digitalen Fernsehrückkanal gesendet wird.

6. Das Verfahren gemäss einem der Ansprüche 1 bis 4, in welchem eine Rückmeldung des Zuschauers (7) über ein Kommunikationsnetz wie ein Mobilfunknetz, ein Festnetz, Internet, mittels Kurzmeldungen (SMS, USSD), oder Anrufe (IVR) an den Broker (4) gesendet wird.

7. Das Verfahren gemäss einem der Ansprüche 1 bis 5, in welchem eine Rückmeldung über einen der Netzbetreiber (5) an den benannten Broker (4) gesendet wird, wobei das Format der Rückmeldung vom Broker (4) umgewandelt wird.

8. Das Verfahren gemäss einem der Ansprüche 1 bis 7, in welchem eine Rückmeldung des Zuschauers (7) mit einer Identität des Zuschauers (7) verknüpft wird und gesendet wird.

9. Das Verfahren gemäss einem der Ansprüche 1 bis 8, in welchem die Rückmeldungen vom Broker (4) ausgewertet werden und dem benannten Werbenden (1) Auswerteberichte zur Verfügung gestellt werden.

10. Das Verfahren gemäss einem der Ansprüche 1 bis 9, in welchem der interaktive Inhalt des Werbespots auf der Basis eines Templates definiert wird.

11. Das Verfahren gemäss einem der Ansprüche 1 bis 10, in welchem der interaktive Inhalt die Art der Interaktivität, die Abfolge der Prompts, vorgegebene Rückmeldungen, Logos und/oder Bilder definiert.

12. Das Verfahren gemäss einem der Ansprüche 1 bis 11, in welchem die Aussendekriterien neben der Liste der Netzbetreiber (5), eine Liste der Fernsehkanäle und/oder ein Zeitplan oder ein Zeitfenster für die Aussendung des Werbespots umfassen.

13. Das Verfahren gemäss einem der Ansprüche 1 bis 12, in welchem mindestens ein Teil des interaktiven Inhalts des Werbespots auf einer Fernsehbedienung des Zuschauers (7) angezeigt wird.

14. Das Verfahren gemäss einem der Ansprüche 1 bis 13, in welchem sich der Fernsehzuschauer (7) beim Broker (4) registriert.

15. System zum Aussenden von interaktiver Werbung in einem Fernsehkanal zur Durchführung eines Verfahrens gemäss einem der Ansprüche 1 bis 13, umfassend eine internetbasierte Plattform mit
(a) Mitteln zur Definition von einem interaktiven Inhalt eines Werbespots;
(b) Mitteln zur Definition der Aussendekriterien des interaktiven Werbespots, wobei die benannten Aussendekriterien mindestens eine Liste von ausgewählten Netzbetreibern (5) bestimmt;
(c) Mitteln zum Umwandeln des Formats des benannten interaktiven Inhalts in Abhängigkeit von den Netzbetreibern (5);
(d) Mitteln zum Weiterleiten des interaktiven Inhalts zu den ausgewählten Netzbetreibern (5).

16. System gemäss Anspruch 15, mit Mitteln zur Schaffung einer interaktiven Identifizierung (ID) des Werbespots und/oder der entsprechenden Werbekampagne, wobei die benannte interaktive Identifizierung (ID) dem benannten interaktiven Inhalt entspricht.

17. System gemäss dem Anspruch 16, mit Mitteln, um die interaktive Identifizierung (ID) in den Werbespots des Werbenden einzufügen.

18. System gemäss einem der Ansprüche 15 bis 17, mit Mitteln zum Empfangen der Rückmeldungen auf den benannten interaktiven Werbespot der Fernsehzuschauer (7).

19. System gemäss Anspruch 15 bis 18, in welchem Mittel zum Empfangen von Rückmeldungen des Fernsehzuschauers (7) mittels SMS, USSD, IVR über ein Kommunikationsnetz vorhanden sind.

20. System gemäss einem der Ansprüche 15 bis 19, in welchem die Mittel zur Definition des interaktiven Inhalts des Werbespots template-basiert sind.

21. System gemäss einem der Ansprüche 15 bis 20, in welchem die Aussendekriterien neben der Liste der Netzbetreiber (5), eine Liste der Fernsehkanäle und/oder ein Zeitplan oder ein Zeitfenster für die Aussendung des Werbespots umfassen.

22. System gemäss einem der Ansprüche 15 bis 21, in welchem der interaktive Inhalt die Art der Interaktivität, die Abfolge der Prompts, vorgegebene Rückmeldungen, Logos und Bilder definiert.

23. System gemäss einem der Ansprüche 15 bis 22, in welchem in der internetbasierten Plattform Mittel zur Registrierung der Fernsehzuschauer (7) vorhanden sind.
